# EUROPEAN PATENT APPLICATION

(11) **EP 4 411 059 A2**
(43) Date of publication of application: **07.08.2024**
(21) Application number: 24155927.7
(22) Date of filing: 06.02.2024
(51) Int. Cl.: D06M 13/00, A01N 41/04, A01P 1/00, D06M 15/227, D06M 15/233, D06M 15/356, D06M 16/00

(54) **COMPOSITIONS AND METHODS FOR ODOR CONTROL**

(30) Priority: 06.02.2023 US 202363443671 P
(71) Applicant: Kraton Polymers Nederland B.V., 1322 CE Almere (NL)
(72) Inventor: ALWATTARI, Ali, Houston, Texas 77032 (US); SMITH, James D, Houston, Texas 77032 (US); PEDDINTI, Bharadwaja, Houston, Texas 77032 (US)
(74) Representative: Henkel & Partner mbB

(57) **Abstract**

A deodorizing composition for reducing or suppressing odor from surfaces and method for same is provided. The deodorizing composition also provides antimicrobial protection while removing odor from a surface. The method includes applying a deodorizing composition to the surface affected by the malodors / odor-causing microbes. The deodorizing composition comprises a sulfonated polymer having an ion exchange capacity (IEC) of greater than 0.5 meq/g, and optionally a deodorizing agent selected from the group consisting of a) cage molecules, e.g., carcerands or macrocycles such as cyclodextrin, cucurbiturils, oxazoline, and calixarene; b) powder or solid odor absorbers such as sodium bicarbonate, hydrated silica (e.g., silicon dioxide), silica gel, perlite, bentonite or hectorite clay, zeolites, wood dust, and carbon black; c) benzoic acid and derivatives thereof; and d) deodorizing materials that have a Malodor Reduction Value (MORV) of at least 0.5.

## Description

### RELATED APPLICATIONS

This application claims priority to US Provisional Application No. 63/443,671, filed on February 6, 2023, incorporated herein by reference in its entirety.

### TECHNICAL FIELD

The disclosure relates to compositions and methods for odor control.

### BACKGROUND

Odors are a long-recognized issue in every day's life. Odors are generated through the use and wear of clothing and shoes, the spoilage of certain food products, decaying of microorganisms with the production of certain metabolites, etc. Odor can be associated with strong and / or intensive smell such as fragrance, deodorant, detergent, linen, etc., which can cause allergic reactions in some. Odors can linger in space or articles, e.g., polymer-based items such as trash cans, food containers, lunch boxes, etc. Odorant molecules may also be attracted to certain textile fibers and surfaces.

Studies have shown positive correlations were observed between odor intensity and the relative abundance of certain microbes such as Staphylococcus hominis, Staphylococcus epidermidis, and Cutibacterium avidum. In some studies, it is shown that there is a metabolic pathway associating isovaleric and acetic acid production (sour odor) with enriched S. epidermidis and S. hominis enzymes, as well as sulfur production from Staphylococcus species with odor intensity .

It would be advantageous to have compositions and methods to effectively control, inhibit, combat, trap and / or capture the build-up of odors for long-lasting protection, particularly compositions that also have antimicrobial properties.

### SUMMARY

In one aspect, a method to control odor due to microbes or chemical action is provided. The method comprises applying a deodorizing composition to a surface having an initial Olfactory Intensity score. The deodorizing composition comprises a sulfonated polymer having an ion exchange capacity (IEC) of greater than 0.5 meq/g, and optionally an additional deodorizing agent. The deodorizing composition present in amounts effective to reduce the Olfactory Intensity score by at least 20% after 30 minutes or suppress an increase of more than 1 in the Olfactory Intensity score after a period of 24 hours.

In an aspect, the deodorizing composition is applied to the surface by any of impregnation, coating, immersing, dipping, rinsing, wetting, spraying, soaking, wiping, rubbing, brushing, sprinkling, electrostatic deposit, scrubbing, and combinations.

In an aspect, the deodorizing composition is applied as powder, a solution, a liquid spray, a powder spray, a foam, a gel, an aerosol, a film, or as microspheres.

### DESCRIPTION

The following terms used in the specification have the following meanings:

"At least one of [a group such as A, B, and C]" or "any of [a group such as A, B, and C]" means a single member from the group, more than one member from the group, or a combination of members from the group. For example, at least one of A, B, and C includes, for example, A only, B only, or C only, as well as A and B, A and C, B and C; or A, B, and C, or any other all combinations of A, B, and C. In another example, at least one of A and means A only, B only, as well as A and B. A list of embodiments presented as "A, B, or C" is to be interpreted as including the embodiments, A only, B only, C only, "A or B," "A or C," "B or C," or "A, B, or C."

"Odor" refers to a smell or scent and can be pleasant or unpleasant. Odor can be defined in the context of quality, e.g., fragrant, pungent, stale, etc. or quantity (i.e., olafactory intensity) as defined below.

"Olfactory Intensity" is understood for example to mean the measurement of smell or scent intensity. The odor intensity can be measured according to the German standard VDI 3882. In embodiments, the odor intensity can be evaluated on a scale from 0 to 5 (5 very strong, 4 strong, 3 medium, 2 weak, 1 very weak, 0 not detectable), as determined by a panel screened for their ability to detect odors using an odor identification test capable of providing an index of smell loss and an index for detecting malingering..

"Surface" refers to an outside part or uppermost layer or external aspect of something (an object or a body). The surface also refers to a continuous set of points that has length and breadth but with or without thickness. The surface is available to deposit or coat a material of the choice.

"Effective amount" refers to an amount sufficient to reduce, alter, destroy, inactivate, neutralize odor intensity and / or inhibit growth of microorganisms and / or byproducts causing malodors. In embodiments, effective amount means an amount sufficient to sterilize and kill at least 90% (1 log₁₀ CFU) microorganisms in contact with the antimicrobial polymer.

"Soft solid" refers to a composition with a static yield stress of about 200 Pa to about 1,300 Pa.

"Anhydrous" refers to compositions and / or components which are substantially free of added water or free of water.

"Substantially free of' refers to about 2 percent or less, about 1 percent or less, or about 0.1 percent or less of a stated ingredient. "Free of" refers to no detectable amount of the stated ingredient or thing.

"Ion Exchange Capacity" or IEC refers to the total active sites or functional groups responsible for ion exchange in a polymer. Generally, a conventional acid-base titration method is used to determine the IEC, see for example International Journal of Hydrogen Energy, Volume 39, Issue 10, March 26, 2014, Pages 5054-5062, "Determination of the ion exchange capacity of anion-selective membrane." IEC is the inverse of "equivalent weight" or EW, which the weight of the polymer required to provide 1 mole of exchangeable protons.

"Dissolve" refers to partially or fully dissolve a sulfonated polymer in a solvent. Partially dissolve means > 40% and < 100% of the sulfonated polymer is dissolved in the solvent, or 50 - 99%, or 60 - 95%, or > 70%. Fully dissolved means 100% of the sulfonated polymer is dissolved in the solvent.

"Solubility Parameter" or (δ) of a solvent or polymer, refers to the square root of the vaporization energy (ΔE) divided by its molar volume (V), as in the equation δ = (ΔE/V)^{1/2} . The more similar the solubility parameters of two substances, the higher will be the solubility between them and hence the expression "like dissolves like." Hansen established that the solubility parameter of a solvent or polymer is the result of the contribution of three types of interactions: dispersion forces (δ_{D}²), polar interactions (δ_{P}²) and hydrogen bonds (δ_{H}²) (Hansen, 2007; Hansen, 1967), with the total solubility (Hildebrand) parameter δT as the result of contribution of each of the three Hansen solubility parameters (HSP) according to: δ_{T} = (δ²_{D} + δ²_{P} + δ²_{H} )^{½}.

"Susceptible to sulfonation" refers to a polymer, polymer block, compound, monomer, oligomer, etc., being predisposed, or sensitive, or capable of reaction with sulfur containing compound, e.g., SO₃, H₂SO₄, etc., under conditions conventionally employed for sulfonation, wherein sulfonation is very likely to occur to obtain a sulfonated product. In embodiments, a polymer block "susceptible to sulfonation" upon sulfonation, the degree of sulfonation is at least 10 mol%, or at least 20 mol%, or at least 30, or at least 50 mol%, or at least 75 mol%, of the total polymer block, for the polymer block to have at least 10 mol%, or at least 20 mol%, or at least 30, or at least 50 mol%, or at least 75 mol% sulfonic acid or sulfonate ester functional groups.

"Resistant to sulfonation" means having little if any sulfonation of the respective block under conditions conventionally employed for sulfonation, with < 10 mol%, or < 8 mol%, or < 5 mol% sulfonic acid or sulfonate ester functional groups in the polymer block.

"Molecular weight" or M_{w} refers to the polystyrene equivalent molecular weight in g/mol of a polymer block or a block copolymer. M_{w} can be measured with gel permeation chromatography (GPC) using polystyrene calibration standards, such as is done according to ASTM 5296-19. The GPC detector can be an ultraviolet or refractive index detector or a combination thereof. The chromatograph is calibrated using commercially available polystyrene molecular weight standards. M_{w} of polymers measured using GPC so calibrated are polystyrene equivalent molecular weights or apparent molecular weights. M_{w} expressed herein is measured at the peak of the GPC trace and are commonly referred to as polystyrene equivalent "peak molecular weight," designated as Mₚ.

"Microbe" or "microbial" should be interpreted to refer to any of the microscopic organisms studied by microbiologists or found in the use environment of a treated article. Such organisms include, but are not limited to, bacteria and fungi as well as other single-celled organisms such as mold, mildew and algae. Viral particles and other infectious agents are also included in the term microbe.

"Antimicrobial" refers to an agent that will kill or inhibit the growth of microorganisms.

The disclosure relates to a deodorizing composition comprising sulfonated polymer and methods to controlling odors via the polymer composition, optionally with a deodorizing agent. The deodorizing composition can be in any of a solid (e.g., powder, pellets, crumbs, etc.), gel, foam, spray (aerosol and non-aerosol), or liquid form, to be applied onto surfaces and / or articles, or embedded into articles, for odor control.

### Sulfonated Polymer

Sulfonated polymer refers to polymers having a sulfonate group, e.g., -SO₃, either in the acid form (e.g., -SO₃H, sulfonic acid) or a salt form (e.g., -SO₃Na). The term "sulfonated polymer" also covers sulfonate containing polymers, e.g., polystyrene sulfonate. Examples of sulfonated polymer includes perfluorosulfonic acid polymers (e.g., sulfonated tetrafluoroethylene based fluoropolymer-copolymer), sulfonated polyolefins, sulfonated polyimides, sulfonated styrenic block copolymers, sulfonated polyamides, sulfonated polyester, polystyrene sulfonates, sulfonated polysulfones such as polyether sulfone, sulfonated polyketones such as polyether ether ketone, sulfonated polyphenylene ethers, and mixtures thereof.

In embodiments, the sulfonated polymer is characterized as being sufficiently sulfonated, meaning having at least 10 mol% of sulfonic acid or sulfonate ester functional groups based on total mol of the number of monomer units or polymer blocks to be sulfonated ("degree of sulfonation"). In embodiments, the sulfonated polymer has a degree of sulfonation of at least 10 mol%, or > 15, or > 20, or > 25, or > 30, or > 40, or > 50, or > 60, or > 70, or > 80, or > 90, or > 99, or 10 - 100, or 20 - 90, or 30 - 80 mol%. The degree of sulfonation can be calculated by NMR or ion exchange capacity (IEC). In embodiments, the sulfonated polymer has an ion exchange capacity (IEC) of at least 0.5, or > 0.75, or > 1.0, or > 1.5, or > 2.0, or > 2.5, or < 5.0 or 0.5 - 3.5, or 0.5 - 2.6 meq/g.

In embodiments, the sulfonated polymer is a sulfonated styrenic block copolymer (SSBC) obtained by sulfonation of a styrenic block copolymer (SBC) precursor which is any of linear, branched, or radial block copolymer having at least one end block A and at least one interior block B. The SSBC has at least a sulfonate group, e.g., -SO₃, either in an acid form (e.g., -SO₃H, sulfonic acid) or a salt form (e.g., -SO₃Na). The sulfonate group can be in the form of metal salt, ammonium salt, or amine salt.

In embodiments, the SBC precursor is prepared by anionic polymerization using techniques known in the art. Other methods, such as cationic polymerization, can also be employed. The anionic polymerization initiator is generally an organometallic compound, such as, an organolithium compound, e.g., ethyl-, propyl-, isopropyl-, n-butyl-, sec-butyl-, tert-butyl-, phenyl-, hexylbiphenyl-, hexamethylenedi-, butadieneyl-, isopreneyl-, 1,1-diphenylhexyllithium, or polystyryllithium. An amount of initiator needed is calculated based on the molecular weight to be achieved, generally from 0.002 to 5 wt.%, based on amount of monomers to be polymerized. Suitable solvent for the polymerization includes aliphatic, cycloaliphatic, or aromatic hydrocarbons having from 4 to 12 carbon atoms, such as pentane, hexane, heptane, cyclopentane, cyclohexane, methylcyclohexane, decalin, isooctane, benzene, alkylbenzenes, such as toluene, xylene or ethylbenzene, and mixtures thereof. Polymer chain termination can be achieved by quenching with a proton donor or a compound having a leaving group that can be displaced by the carbanionic polymer chain.

If desired, a Lewis base additive, which affects polymerization parameters can also be employed. Examples of Lewis bases include dimethyl ether, diethyl ether, ethylene glycol dimethyl ether, 1,2-diethoxypropane, diethylene glycol dimethyl ether, tetrahydrofuran, tetrahydrofurfuryl ethers, such as tetrahydrofurfuryl methyl ether, and tertiary amines. The additives can influence the extent of 1,2-addition of the conjugated diene, and therefore the vinyl group content in the respective block.

In embodiments, the SBC precursor has a general configuration of: A-B-A, (A-B)ₙ(A), (A-B-A)ₙ, (A-B-A)ₙX, (A-B)ₙX, A-D-B, A-B-D, A-D-B-D-A, A-B-D-B-A, (A-D-B)ₙA, (A-B-D)ₙA (A-D-B)ₙX, (A-B-D)ₙX, (A-D-B-D-A)ₙX, (A-B-D-B-A)ₙX or mixtures thereof; where n is an integer from 2 to 30; and X is a residue of a coupling agent. Each block A and D is resistant to sulfonation, and each block B is susceptible to sulfonation.

In embodiments, the coupling agent X includes bi- or polyfunctional compounds, for example divinylbenzene, halides of aliphatic or araliphatic hydrocarbons, such as 1,2-dibromoethane, bis(chloromethyl)benzene, or silicon tetrachloride, dialkyl- or diarylsilicon dichloride, alkyl- or arylsilicon trichloride, tin tetrachloride, alkylsilicon methoxides, alkyl silicon ethoxides, polyfunctional aldehydes, such as terephthalic dialdehyde, ketones, esters, anhydrides, or epoxides. In embodiments, the coupling agent is selected from methyltrimethoxysilane (MTMS), methyltriethoxysilane (MTES), tetramethoxysilane (TMOS), dimethyladipate, gamma-glycidoxypropyltrimethoxy silane, and mixtures thereof.

In embodiments, the block A has at least one compound selected from polymerized (i) para-substituted styrene, (ii) ethylene, (iii) alpha olefins of 3 to 18 carbon atoms; (iv) 1,3-cyclodiene, (v) conjugated dienes having a vinyl content of < 35 mol% prior to hydrogenation, (vi) acrylic esters, (vii) methacrylic esters, and (viii) mixtures thereof. If the block A is a polymer of 1,3-cyclodiene or conjugated diene monomer, the block A will be hydrogenated subsequent to preparation of the SBC and before sulfonation of the SBC precursor. In embodiments, the block A contains up to 15 wt.% of vinyl aromatic monomers such as those present in the block B.

In embodiments, the block A is derived from polymerized para-substituted styrene monomers selected from the group consisting of para-methylstyrene, para-ethylstyrene, para-n-propylstyrene, para-iso-propylstyrene, para-n-butylstyrene, para-sec-butylstyrene, para-iso-butylstyrene, para-t-butylstyrene, isomers of para-decylstyrene, isomers of para-dodecylstyrene, and mixtures thereof.

In embodiments, the block B is derived from polymerized vinyl aromatic monomers selected from the group consisting of unsubstituted styrene, ortho-substituted styrene, meta-substituted styrene, alpha-methylstyrene, 1,1-diphenylethylene, 1,2-diphenylethylene, and mixtures thereof. In embodiments, the block B has a mixture of the vinyl aromatic monomer and hydrogenated conjugated dienes, such as butadiene or isoprene, having a vinyl content, prior to hydrogenation, of 2 - 40, or 5 - 38, or 8 - 35, or 10 - 30, or > 5, or < 40 wt.%, based on total weight of polymerized conjugated diene monomers in the block B.

In embodiments, the block D is derived from a polymer or copolymer of a conjugated diene monomer selected from the group consisting of isoprene, 1,3-butadiene, 2,3-dimethyl-1,3-butadiene, 1-phenyl-1,3-butadiene, 1,3-pentadiene, 1,3-hexadiene, 3-butyl-1,3-octadiene, farnesene, myrcene, piperylene, cyclohexadiene, and mixtures thereof.

In embodiments, prior to hydrogenation and sulfonation, the block D has a vinyl content of > 80, or > 85, or > 90, or > 95, or > 98, or > 99, or > 99.5, or 50 - 95, or 60 - 90, or 70 - 95 wt.% or 80 - 95 wt.%, based on total weight of the polymerized conjugated diene monomers in the block D.

In embodiments, the block D has a hydrogenation level of 60 - 99%, or 65 - 95%, or 70 - 90%, or 75 - 99%, or > 75%, or > 85%, or > 95%, or > 98%.

In embodiments, each block A and B independently has a hydrogenation level of 0 - 20%, or 2 - 18%, or 4 - 15%, or > 10%, or > 15%, or < 20%. A suitable catalyst based on nickel, cobalt or titanium can be used in the hydrogenation step.

The SBC precursor is sulfonated to provide the corresponding SSBC. Sulfonation occurs at the phenyl ring of polymerized styrene units in the block B, predominantly para to the phenyl carbon atom bonded to the polymer backbone. In embodiments, the block B has a degree of sulfonation of 10 - 100, or 15 - 95, or 20 - 90, or 25 - 85, or 30 - 80, or 35 - 75, or 40 - 70, or > 15, or < 85 mol%, based on total mol of the block B.

In embodiments, the SSBC is a midblock-sulfonated triblock copolymer, or a midblock-sulfonated pentablock copolymer, e.g., a poly(p-tert-butylstyrene-b- styrenesulfonate-b-p-tert-butylstyrene), or a poly[tert-butylstyrene-b-(ethylene-alt-propylene)-b-(styrenesulfonate)-b-(ethylene-alt-propylene)-b-tert-butylstyrene.

In embodiments, the SSBC controls odor, specifically microbial generating odor by killing > 90%, or > 95%, or > 98%, or > 99%, or > 99.9% of microbes coming in contact with the sulfonated polymer in < 30, or < 25, or < 20, or < 15, or < 10, or < 5, or < 1 min. In embodiments, the SSBC is found effective in destroying / inactivating at least 99.9% (3 log₁₀ CFU), or at least 99% (2 log₁₀ CFU), or at least 95%, or at least 90% (1 log₁₀ CFU) of microbes in < 30 min., or < 60 min., or < 120 min. upon contact with the sulfonated polymer. In embodiments when applied as a layer / coating onto surfaces or articles, the SSBC layer remains effective for killing microbes causing odor for a long period of > 4 hrs., > 10 hrs., or > 20 hrs., or > 48 hrs., or 1 week, or > 4 weeks or > 2 months, or > 6 months.

In embodiments, the SSBC has a Mₚ of 25 - 500, or 30 - 450, or 35 - 400, or 40 - 350, or 45 - 300, or 50 - 250, or > 35, or < 350 kg/mol.

In embodiments, the SSBC has a glass transition temperature (T_{g}) of 80 - 180°C, or 85 - 160°C, or 90 - 150°C, or 100 - 140°C, or > 90°C, or < 210°C, measured by Dynamic Mechanical Analysis (DMA), according to ASTM 4065.

The SSBC in embodiments is as disclosed in Patent Publication Nos. US9861941, US8263713, US8445631, US8012539, US8377514, US8377515, US7737224, US8383735, US7919565, US8003733, US8058353, US7981970, US8329827, US8084546, US8383735, and US 10202494, incorporated herein by reference.

The properties of the sulfonated polymer can be varied and controlled by varying the amount of sulfonation, the degree of neutralization of the sulfonic acid groups to the sulfonated salts, as well as controlling the location of the sulfonated group(s) in the polymer. In embodiments, the sulfonated polymer is selectively sulfonated for desired water dispersity properties or mechanical properties, e.g., having the sulfonic acid functional groups attached to the inner blocks or middle blocks, or in the outer blocks of a sulfonated polymer, as in US Patent No. US8084546, incorporated by reference. If the outer (hard) blocks are sulfonated, upon exposure to water, hydration of the hard domains may result in plasticization of those domains and softening, allowing dispersion or solubility.

Depending on the applications and the desired properties, the sulfonated polymer can be modified (or functionalized). In embodiments, the sulfonated polymer is neutralized with any of various metal counterions, including alkali, alkaline earth, and transition metals, with at least 10% of the sulfonic acid groups being neutralized. In embodiments, the sulfonated polymer is neutralized with inorganic or organic cationic salts, e.g., those based on ammonium, phosphonium, pyridinium, sulfonium, and the like. Salts can be monomeric, oligomeric, or polymeric. In embodiments, the sulfonated block copolymer is neutralized with various primary, secondary, or tertiary amine-containing molecules, with > 10% of the sulfonic acid or sulfonate ester functional groups being neutralized.

In embodiments, the monomer or the block containing amine functionality or phosphine functionality can be neutralized with acids or proton donors, creating quaternary ammonium or phosphonium salts. In other embodiments, the sulfonated polymer containing tertiary amine is reacted with alkylhalides to form functional groups, e.g., quaternized salts. In some embodiments, the sulfonated polymer can contain both cationic and anionic functionality to form so-called zwitterionic polymers.

In embodiments, the sulfonic acid or sulfonate functional group is modified by reaction with an effective amount of polyoxyalkyleneamine having molecular weights from 140 to 10,000. Amine-containing neutralizing agents can be mono-functional or multi-functional; monomeric, oligomeric, or polymeric. In alternative embodiments, the sulfonated polymer is modified with alternative anionic functionalities, such as phosphonic acid or acrylic and alkyl acrylic acids.

In embodiments, amine containing polymers are used for the modification of the sulfonated polymers, forming members of a class of materials termed coaservates. In examples, the neutralizing agent is a polymeric amine, e.g., polymers containing benzylamine functionality. Examples include homopolymers and copolymers of 4-dimethylaminostyrene which has been described in US Patent 9,849,450, incorporated herein by reference. In embodiments, the neutralizing agents are selected from polymers containing vinylbenzylamine functionality, e.g., polymers synthesized from poly-p-methylstyrene containing block copolymers via a bromination-amination strategy, or by direct anionic polymerization of amine containing styrenic monomers. Examples of amine functionalities for functionalization include but are not limited to p-vinylbenzyldimethylamine (BDMA), p-vinylbenzylpyrrolidine (VBPyr), p-vinylbenzyl-bis(2-methoxyethyl)amine (VBDEM), p-vinylbenzylpiperazine (VBMPip), and p-vinylbenzyldiphenylamine (VBDPA). In embodiments, corresponding phosphorus containing polymers can also be used for the functionalization of the sulfonated polymers.

Other sulfonated polymer can be selected from sulfonated polystyrene-polyisoprene-polystyrene sulfonated in the center segment, sulfonated t-butylstyrene / isoprene random copolymer with C=C sites in their backbone, sulfonated SBR (styrene butadiene rubber) as disclosed in US 6,110,616 incorporated by reference, and mixtures thereof. In embodiments, the sulfonated polymer is a water dispersible BAB triblock, with B being a hydrophobic block such as alkyl or (if it is sulfonated, it becomes hydrophilic) poly(t-butyl styrene) and A being a hydrophilic block such as sulfonated poly(vinyl toluene) as disclosed in US 4,505,827 incorporated by reference. In embodiments, the sulfonated polymer is a water-soluble polymer, a sulfonated diblock polymer of t-butyl styrene / styrene, or a sulfonated triblock polymer of t-butyl styrene -styrene - t-butyl styrene as disclosed in US 4,492,785 incorporated by reference.

In embodiments, the sulfonated polymer is a water-soluble polymer, a sulfonated diblock polymer of t-butyl styrene / styrene, or a sulfonated triblock polymer of t-butyl styrene - styrene - t-butyl styrene as in US 4,492,785 incorporated by reference.

The sulfonated polymer can be in the form of powder, granules, pellets, crumbs, and the like. In embodiments, the sulfonated polymer is in the form of film or membrane in a solvent solution. The film or membrane can be dried and shredded into flakes or ribbons, then ground to powder by any of grinding, cryogenic milling, impact milling, jet milling, ball milling, rotor milling, vibratory milling, attrition milling, and crushing / pulverizing, to produce a powder size of 0.001 to 5000 micron. In a preferred embodiment, the sulfonated polymer is cryoground in a grinder to a size of 0.01-5000 or 0.1-5000, or 0.1-1000 micron, or 10-500 micron, or 50-500 micron, or 100-500 micron.

The sulfonated polymer can be in solution form by dissolving a solid form of the sulfonated polymer, e.g., film, membrane, powder, granules, pellets, crumbs and the like in a solvent system as described below.

In embodiments, the sulfonated polymer is present in the deodorizing composition in an amount effective to control or reduce odor, in amounts ranging from 0.1 to 100% depending on the application, the form of the deodorizing composition (e.g., foam, solid, liquid as spray, etc.). In embodiments, in solid form, the sulfonated polymer can be 100 wt.%, or 1-99.9 wt.%, or 1-95 wt.%, or 5-90 wt.% or, 50-99.9 wt.%, or 60-99 wt.%, of the deodorizing composition. In other embodiments, the sulfonated polymer is present in an amount of 0.1-50 wt.%, or 0.1-40 wt.%, or 0.5-50 wt.%, or 0.5-40 wt.%, or 1-50 wt.%, or 1-40 wt.% or 1-35 wt.%, or 1-20 wt.%, based on the total weight of the deodorizing composition.

### Additional / Optional Deodorizing Agents

In embodiments, the sulfonated polymer is further combined with additional deodorizing agents. "Deodorizing agent" refers to a composition that absorbs, reduces, eliminates, controls, captures or traps, removes, and / or masks smells, especially unpleasant ones such as malodors. In embodiments, the additional deodorizing agents are selected from the group consisting of: a) cage molecules, e.g., carcerands or macrocycles such as cyclodextrin, cucurbiturils, oxazoline, and calixarene; b) powder or solid odor absorbers such as sodium bicarbonate, hydrated silica (e.g., silicon dioxide), silica gel, perlite, bentonite or hectorite clay, zeolites, wood dust, and carbon black; c) benzoic acid and derivatives thereof; and d) deodorizing materials that have a Malodor Reduction Value (MORV) of at least 0.5.

The additional deodorizing agent is selected based on the end-use application, e.g., solution, powder, spray, gel, soft solid, foam; for use as a surface coating or surface treatment, etc.; and the odor type, e.g., odor cause by microbes, ammonium ion containing odor, etc.

In embodiments, the additional deodorizing agent is selected from materials that have a Malodor Reduction Value (MORV) of at least 0.5, or at least 1, or 0.5-10. Examples include oxybenzone, octyl acetate, nonyl alcohol, musk ketone, methyl octine carbonate, D-limonene, lauric acid, geranyl linaool, gamma-terpineol, farnesol, eugenol, diphenyloxide, cyclotetradecane, curzerene, coumarone, cinnamyl cinnamate, bisabolene, alpha-cubebene, 7-methoxycoumarin, 3,4,5-trimethyloxybenzaldehyde, p-cresyl isobutyrate, sabinol, thymol methyl ester, methyl 2,4-dihydroxy-3,6-dimethylbenzoate, isobornyl cyclohexanol, cedryl methyl ether, n-hexyl salicylate, eucalyptol, dihydro-alpha-ionone, citronellol, chloroxylenol, benzyl alcohol, 2-isopropyl-5-methyl-2-hexanal, p-propyl anisole, sabinene, alpha-agarofuran, thujopsene, and other materials disclosed in US Patent Publication 2016/0089464, incorporated herein by reference.

In embodiments, the sulfonated polymer is used in combination with traditional materials known in the art as additional deodorizing agetns, particularly for "dry" applications wherein there is little concern about the additional deodorizing agent losing functionality upon exposure to water. Examples include inorganic absorbents, including molecular sieves, such as zeolites, silicas, aluminosilcates; and organic absorbents, such as for example, activated charcoal, dried citrus pulp, cherry pit extract, corncob, and mixtures thereof.

In embodiments, the additional deodorizing agent is selected from the group of Chloramine-T, sodium bicarbonate, sodium percarbonate, hydrated silica (e.g., silicon dioxide), silica gel, perlite, bentonite or hectorite clay, zeolites, wood dust, carbon black, and mixtures thereof. In embodiments, at least two deodorizing agents are used, e.g., a mixture of sodium bicarbonate and activated carbon in ratios of 1:10 to 10:1.

In embodiments, the additional deodorizing agent is a zeolite, e.g., an inorganic aluminosilicate zeolite, a zeolite comprising an aluminate/silicate framework a zeolite A, or a sodium zeolite A having an S1O2/AI2O3 ratio of less than 4:1. Examples of zeolite as deodorizing agents are disclosed in US4437429A, US5944704A and WO1997001317A1, incorporated herein by reference.

(Cucurbituril): In embodiments, the additional deodorizing agent comprises, consists essentially of, or consists of at least a cucurbituril and derivatives thereof. Curbituril is a macrocyclic compound composed of six monomers and having a chemical formula of C₃₆H₃₆N₂₄O₁. Cucurbituril has a hydrophobic cavity and has hydrophilic inlets at both sides thereof. Cucurbituril can interact with various odor materials using its hydrophobic cavity and both inlets covered with carbonyl groups, and it can =remove odors and made into different product forms according to the composition ratio of cucurbituril homologues.

In embodiments, the additional deodorizing agent comprises cucurbituril and one or more first metal salts, the first metal salt including at least one metal cation with a valency of at least two and at least one anion, wherein the metal cation is selected from the group made of aluminum, zirconium, silver, titanium, iron, copper, zinc, and magnesium cations. In embodiments, the additional deodorizing agent comprises a mixture of two or more cucurbiturils selected from cucurbit[5]urils, cucurbit[6]urils, cucurbit[7]urils, and cucurbit[8]urils, for counteracting malodors in a moist environment. The terms cucurbit[5]uril, cucurbit[6]uril, cucurbit[7]uril, and cucurbit[8]uril means a cucurbituril molecule formed from five, six, seven and eight glycoluril molecules respectively. In embodiments, the additional deodorizing agent comprises a suspension with cucurbituril particles suspended in a medium, e.g., a wax.

In embodiments, the curbituril is provided as a plurarity of cucurbituril with one or more fragrance molecule(s), e.g., alcohols, esters, carbonates and glycolate, Ethers, acetals and ketals,etc., as disclosed in GB2547281B, incorporated by reference. In other embodiments, cucurbituril derivatives are employed as deodorizing agent, with structure having one, two, three, four or more substituted glycoluril units.

Examples of cucurbituril and derivatives as deodorizing agents are disclosed in Patent Publications Nos. US20230010214, WO2014077642, WO2017141029, WO2018/037209, WO2016/185209, and US11484615, incorporated herein by reference. Cucurbituril can be prepared as disclosed in EP3543243A1, incorporated by reference.

In embodiments with the use of curbituril as an additional deodorizing agent, the composition is particularly effective in capturing an odor molecule having an amino group or a carboxyl group.

(Cyclodextrin): In embodiments, the additional deodorizing agent is cyclodextrin, more generally referred to as a cyclic oligosaccharide. Cyclodextrin includes any of the known cyclodextrins such as unsubstituted cyclodextrins containing from six to twelve glucose units, especially, alpha-cyclodextrin, beta-cyclodextrin, gamma-cyclodextrin and/or their derivatives and/or mixtures thereof. The cyclodextrin is uncomplexed, i.e., with the cavities within the cyclodextrin remain essentially unfilled to allow the cyclodextrin to absorb or capture the odor molecules, e.g., the dead microbes, while being combined with the sulfonated polymer in a deodorizing composition.

In embodiments, the additional deodorizing agent is selected from highly water-soluble compounds such as alpha-cyclodextrin and/or derivatives thereof, gamma-cyclodextrin and/or derivatives thereof, derivatized beta-cyclodextrins, and/or mixtures thereof. The derivatives of cyclodextrin consist mainly of molecules wherein some of the OH groups are converted to OR groups. Highly water-soluble cyclodextrins are those having water solubility of at least about 10g in 100 ml of water at room temperature, preferably at least about 20g in 100 ml of water, more preferably at least about 25g in 100 ml of water at room temperature. More preferred are beta cyclodextrin, hydroxypropyl alpha-cyclodextrin, hydroxypropyl beta-cyclodextrin, methylated-alpha-cyclodextrin or methylated-beta-cyclodextrin.

Examples of cyclodextrin as additional deodorizing agents are disclosed in Patent Publications Nos. EP 1006993, incorporated herein by reference.

(Calixarene Compounds): In embodiments, the additional deodorizing agent is calixarene compound, more generally referred to as a cyclic oligosaccharide. In one embodiment, the additional deodorizing agent is a calixarene of the formula: 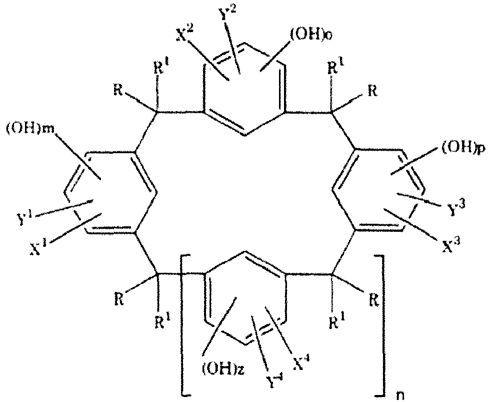 wherein X¹, X², X³, X⁴, Y¹, Y², Y³ and Y⁴ are independently selected from hydrogen, cyano, nitro, halo, (C₁-C₄)alkyl, (C₁-C₄)alkoxy, (C₂-C₁₂)alkenyl, (C₂-C₁₂)alkynyl, phenyl, substituted phenyl, (C₁-C₁₀)aralkyl, substituted (C₇₋C₁₀)aralkyl, NR²R³, SR⁴; X¹ and Y¹, X² and Y², X³ and Y³, and X⁴ and Y⁴ may be joined to form a 5- or 6-membered ring; R and R¹ are independently selected from hydrogen, (Ci-Cs)alkyl, cyclopropyl, phenyl, substituted phenyl, (C₇-C₁₀)aralkyl, and substituted (C₇-C₁₀)aralkyl; R², R³, and R⁴ are independently selected from hydrogen, (C₁-C₄)alkyl, phenyl, and substituted phenyl; n = 1-7; and m, o, p and z are independently selected from 1-3.

In an embodiment, the additional deodorizing agent is a modified calixarene, e.g., a calixarene ammonium salt as disclosed in CN111228042B, incorporated herein by reference.

(Benzoate Compound): In embodiment, the additional deodorizing agent is a benzoate compound, for the production of a benzoic acid when combined with the sulfonated polymer in a deodorizing composition. Examples of benzoate compounds include benzoic acid, its salts and its esters. In embodiments, the additional deodorizing agent is selected from benzoic esters and alkali metal benzoates such as sodium benzoate.

Examples of benzoate compounds are disclosed in US 2022/0411994 A1 and US3113104A, incorporated herein by reference.

It should be noted that other deodorizing agents known in the art can be effectively combined with the sulfonated polymer for a deodorizing composition with both durable antimicrobial and odor-control capability. Examples include phthalocyanine derivatives such as metallophthalocyanine such as iron phthalocyanine and copper phthalocyanine.

The additional deodorizing agent can be a single component listed above, or a combination of components listed above depending on the application, for example, a combination of cyclodextrin in clay to absorb nitrogenous odor as disclosed in US Patent 4884010, incorporated herein by reference.

In embodiments and depending on the odor, there are several mechanisms explaining how the sulfonated polymer works whether independently by itself, or synergistic with optional / additional deodorizing agent(s). In embodiments the sulfonated polymer will interact and kill the microbe origins forming odor, e.g., skin bacteria that produce body odor, fish pathogens or marine bacteria and archaea, mold, fungi, yeasts, etc., and the additional deodorizing agent functions to capture or trap the odor / dead microbes. It is understood, as enzymes secreted by bacteria are primarily responsible for metabolizing biological material to generate foul odor causing compounds, eradicating the odor causing bacteria itself would eliminate the issue at its root cause. In embodiments, the deodorizing composition also achieves odor reduction even in the absence of any antimicrobial action.

A sufficient or effective amount of additional deodorizing agent is employed in the composition, meaning an amount, capacity, or dosage of additional deodorizing agent that produces one or more desired results to capture, suppress, or neutralize the odor, for or after a certain period of time, e.g., > 1 hours, > 3 hours, > 6 hours, > 1 day, > 2 days, > 4 days, or up to a week. In embodiments, a sufficient amount of additional deodorizing agent(s) is used for a weight ratio of deodorizing agent to sulfonated polymer ranging from 1:99 to 99:1, or 5:95 to 95:5, or 10:90 to 90:10, or 20:80 to 80:20, or 50:50.

### Solvent System:

In embodiments, a solvent system is used to dissolve the sulfonated polymer and / or the additional deodorizing agent. The solvent used to dissolve the sulfonated polymer may be the same or different from that used to dissolve the additional deodorizing agent. When different solvents are used to dissolve the sulfonated polymer and the additional deodorizing agent(s), it is preferred that they be miscible with each other. Mixtures of solvents may also be used. By dissolved, it means that the sulfonated block copolymer and / or the additional deodorizing agent is partially dissolved or fully dissolved (100%) in the solvent system. Partially dissolved means > 40% and < 100% of the sulfonated block copolymer and / or the additional deodorizing agent is dissolved in the solvent, or 50 - 99%, or 60 - 95%, or > 70% but < 100%.

The solvent systems can contain one solvent, or two or more solvents, selected from the group consisting of organic solvents, inorganic solvents, terpene-based solvents, decarboxylated rosin acids, and mixtures thereof, as disclosed in US Patent Publication No. 2023/0241003, incorporated herein by reference. In embodiments, the solvent system contains a solvent selected from the group consisting of organic solvents, inorganic solvents, terpene-based solvents, decarboxylated rosin acids, and mixtures thereof. In other embodiments, the solvent system is two or more solvents selected from group consisting of organic solvents, inorganic solvents, terpene-based solvents, decarboxylated rosin acids, and mixtures thereof.

In embodiments, the solvent for dissolving the sulfonated polymer and / or the additional deodorizing agent is an organic solvent selected from acetone, acetyl acetone, acetic acid, acetonitrile, benzonitrile, 2-butanone, t-butyl alcohol, benzyl alcohol, cyclohexane, cyclohexanol, cyclohexanone, dichloromethane, 1,2-dichloroethane, diethylene glycol, diethyl ether, diglyme (diethylene glycol dimethyl ether), 1,2-dimethoxy-ethane (glyme, DME), 1,4-dioxane, methanol, ethanol, 2-ethoxyethanol, 2-propanone, 1,2-propanediol, methyl acetate, ethyl acetate, ethyl acetoacetate, butyl acetate, ethylene glycol, glycerin, heptane, hexamethylphosphoramide (HMPA), hexamethylphosphoroustriamide (HMPT), hexane, methyl t-butyl ether (MTBE), dimethylsulfoxide (DMSO), methyl ethyl ketone (MEK), dimethylformamide (DMF), methyl propyl ketone (MPK), dimethylphthalate, nitromethane, pentane, petroleum ether, pyridine, toluene, aniline, triethyl amine, diethylamine, N,N-dimethylacetamide, o-xylene, m-xylene, p-xylene, naphtha, di-n-butylphthalate, 3-pentanone, chloroform, bis(2-methoxyethyl) ether, ethyl benzoate, tetrahydrofuran(THF), anisole, chlorobenzene, N,N-dimethylaniline, carbon disulfide, carbon tetrachloride, ethylene glycol mono hexyl ether (EGMHE), 1-undecanol, 1-pentanol, tert-butyl methyl ether, 2-ethyl butyl acetate, butyl lactate, N-dodecane, butanol, ethyl lactate, 1-decanol, isopropyl myristate, 1-propanol, 2-propanol, isododecane, ethyl acetate, methyl sulfate, dimethyl sulfate, cresol, creosol, decanal, ethyl glycol acetate, 2-ethyl hexanoic acid, neopentyl glycol, and mixtures thereof. In embodiments, the organic solvent is selected from the group of C₁ - C₆ alkanols, C₁ - C₆ diols, C₁ - C₆ alkyl ethers of alkylene glycols and polyalkylene glycols, and mixtures thereof.

In embodiments, the solvent is an inorganic solvent selected from water, ammonia, and mixtures thereof. In embodiments, the solvent is a terpene-based compound selected from d-limonene, alpha-pinene, beta-pinene, 1-methyl-4-isopropylene-1-cyclohexane, and mixtures thereof. In embodiments, the solvent is a decarboxylated rosin acid (DCR) in the form of a liquid, which is either a crude DCR, a distilled or purified DCR (> 90% purity), or mixtures thereof, as disclosed in US Patent Publication No. US20220195326A1, incorporated by reference.

In embodiments, the solvent has a relative polarity of 0.005 - 0.65, or 0.006 - 0.64, or 0.007 - 0.63, or 0.008 - 0.62, or 0.009 - 0.61.

In embodiments, each solvent is characterized to have at least one of: an OH group, an ester and / or ether group, or 10 or more carbon atoms.

In embodiments, the solvent is a mixture of two solvents different from each other, in a weight ratio of 10:90 to 90:10, or 20:80 to 80:20, or 70:30 to 30:70, or 60:40 to 40:60. Examples of pair of solvents include: toluene and butanol, isododecane and ethyl acetate, ethyl acetate and 1-propanol, tert-butyl methyl ether and 1-propanol, 2-ethyl butyl acetate and 1-propanol, butyl lactate and butanol, 1-decanol and butanol, 1-undecanol and isopropyl myristate, 1-propanol and isopropyl myristate, decanal and isopropyl myristate, 1-undecanol and butanol, 2-ethyl butyl acetate and 1-propanol, ethyl lactate and butanol, isododecane and butanol, decanal and butanol, 1-undecanol and isododecane, decanal and isododecane, n-dodecane and butanol, ethyl glycol acetate and 1-propanol, ethyl glycol acetate and butanol, 1-pentanol and isopropyl myristate, 1-undecanol and 1-pentanol, 2-ethyl hexanoic acid and ethyl acetate, EGMHE and 1-propanol, EGMHE and butanol, EGMHE and ethyl lactate, EGMHE and ethyl glycol acetate, EGMHE and 1-pentanol, EGMHE and 1-decanol, EGMHE and isododecane, EGMHE and decanal, isododecane and 1-pentanol, 2-ethyl hexanoic acid and EGMHE, 2-ethyl hexanoic acid and ethyl acetate, EGMHE and ethanol, isododecane and ethanol, ethyl glycol acetate and ethanol, and neopentyl glycol and ethanol.

In embodiments, the solvent for dissolving both the sulfonated polymer and the additional deodorizing agent is a single solvent, or a mixture of solvents, with a HSP (Hildebrand Solubility Parameter) δD ranging from 15 - 16, or 15.05 - 15.90, or 15.10 - 15.80, or 15.15 - 15.70, or 15.20 - 15.60, or 15.25 - 15.55, a δP ranging from 1 - 7, or 1.2 - 6.8, or 1.4 - 6.5, or 1.5 - 6.0, or 1.6 - 5.6; and a δH ranging from 2 - 9, or 2.1 - 8.5, or 2.2 - 8.0, or 2.2 - 7.5, or 2.3 -7, or 2.4-6.8.

In embodiments, the solvent is a single solvent, or a mixture of solvents, with each solvent independently having a δD of 15 - 16, or 15.05 - 15.90, or 15.10 - 15.80, or 15.15 - 15.70, or 15.20 - 15.60, or 15.25 - 15.55; a δP of 1 - 7, or 1.2 - 6.8, or 1.4 - 6.5, or 1.5 - 6.0, or 1.6 - 5.6; and a δH of 2 - 9, or 2.1 - 8.5, or 2.2 - 8.0, or 2.2 - 7.5, or 2.3 - 7, or 2.4 -6.8.

In embodiments, the solvent system has a total solubility parameter (*δ_{T}*) of > 14.5, or > 15, or > 15.5, or 15 -19, or 15.2 - 18.8, or 15.5 - 18.6, or 15.7 - 18.5, or 15.8 - 18.2.

In embodiments, the deodorizing composition comprises a solvent in an amount of < 99 wt.%, or > 95, or > 90, or < 85, or < 80, or 10 - 99, or 95 - 99 wt.%, based on total weight of the deodorizing composition.

In embodiments, if the solvent is not water itself, the solvent can be further diluted with water for an aqueous system, at a weight ratio of the solvent to water ranging from 10:90 to 90:10, or 20:80 to 80:20, or 70:30 to 30:70, or 60:40 to 40:60, for a viscosity of < 500 centipoise (cps), or < 200 cps, or < 100 cps, or < 50 cps. The lower viscosity solvent formulation allows the deodorizing composition to wick quickly into a stack of dry precut wipes, for the composition to subsequently transfer from the wipe substrate to the surface intended to be contacted / coated with the composition, forming a coating or a protective layer that is antimicrobial as well as deodorant for an extended period of time.

### Optional Additives:

In embodiments, depending on the delivery form, the composition comprises further comprises at least an optional additive selected from the group consisting of fragrance, propellant, stabilizers, buffering agents, surfactant, detackifying agent, natural oil, detectable compound (e.g., color indicators, pH indicators, etc.), neutralizing agents, thickeners, fillers, color change pH indicators, other resins, viscosity modifiers, wetting agents, deaerators, colorants, flow modifiers, drip retardants, antistatic agents, processing aids, stress-relief additives, luminescent additives, such as phosphorescent and fluorescence, and mixtures thereof.

Examples of fragrances include ethyl butyrate, camphor, menthol, hexanal, eugenol, citronellol, linalool, patchoulol, santalol, phenyl ethyl alcohol, terpineol, vanillin, benzaldehyde, methyl salicylate, isoamyl acetate, d-limonene, L-limonene, α-pinene, 2-hydroxy-p-cymene, methyl acetophenone, and cis-jasmone; and/or solvents such as cyclohexane, hexane, heptane, isooctane, isopentane, pentane, dimethyl ether, diethyl ether, methanol, ethanol, propanol, isopropanol, butanol, acetone and propellants.

Examples of surfactant include 4-(5-dodecyl)benzenesulfonate, docusate (dioctyl sodium sulfosuccinate), alkyl ether phosphates, benzalkaonium chloride (BAC), perfluorooctanesulfonate (PFOS), and the like.

In embodiments, the optional additive is present in amounts of 0.05 - 30, or < 20, or < 10, or 0.1 - 15, or 0.5 - 10 wt.%, based on total weight of the deodorizing composition.

### Forms of Deodorizing Composition Containing Sulfonated Polymer

In embodiments, the deodorizing composition containing sulfonated polymer is in the form of a lotion, cream, gel, foam, spray (aerosol and non-aerosol), sprayable powder, thin liquid, body splash, powder, granule, crumb, pellet, compressed powder, solid cosmetic stick, paste, salve, collodion, wipe, impregnated patch, impregnated strip, skin surface implant, impregnated or coated diaper, and similar delivery or packaging form. In other embodiments, the deodorizing composition is in the form of films or membranes, solutions, dispersions, water and oil emulsions, suspensions, colloids, or anhydrous.

In applications, the deodorizing composition is applied to a surface or an article to protect or neutralize odor generated from the surface or article. In embodiments, deodorizing composition is sprayed into a confined space, covering or treating surfaces it is in contact with. The deodorizing composition can also be added in an effective amount as a component for the formation of articles with both antimicrobial as well as deodorizing effects, e.g., shoe insole or inserts, clothing or footwear, a food container, etc.

### Methods for Making:

(Solid): In embodiments, when the deodorizing composition is in solid form, flakes of the sulfonated polymer are ground to powder by any of grinding, cryogenic milling, impact milling, jet milling, ball milling, rotor milling, vibratory milling, attrition milling, and crushing / pulverizing, to produce a powder size of 0.001 to 5000 micron. In a preferred embodiment, the sulfonated polymer is cryoground in a grinder to a size of 0.01-5000 or 0.1-5000, or 0.1-1000 micron, or 10-500 micron, or 50-500 micron, or 100-500 micron. The deodorizing composition in powder form can be present in an amount of up to 100 wt.% sulfonated polymer, with optional deodorizing agents and fillers added depending on the application.

In embodiments, the powder deodorizing composition comprises the sulfonated polymer in an amount of 1-99.9 wt.%, or 1-95 wt.%, or 5-90 wt.% or, 50-99.9 wt.%, or 60-99 wt.%, optional deodorizing agents in an amount of up to 30 wt.%, or < 20 wt.%, or 1-30 wt.% or 1-20 wt.%, and optional additives in an amount of up to 30 wt.%, or < 20 wt.%, or < 10 wt.%, or 1-30 wt.%, or 1-20 wt.%, or 1-10 wt.%, or 1-5 wt.%. The sulfonated polymer and optional deodorizing agents and optional additives can be mixed in any order by using methods known in the art. The powder deodorizing composition can be applied to a surface or body by spraying, dusting, sprinkling, shaking, etc., or contained in sachets to deodorize spaces.

(Foam): The deodorizing composition can be in the form of a foam, e.g., aerosol foam or a post-foaming composition. In embodiments, the foam deodorizing composition comprises sulfonated polymer in an amount of 0.1 to 30 wt.%, or 1-20 wt.%, the solvent system in an amount of < 50 wt.%, or < 40 wt.%, or 1-50 wt.%, or 5-50 wt.%, water in an amount of 30-95 wt.%, or 40-95 wt.%, 60-95 wt.%, preferably 50-80 wt.%, water dispersible (or soluble) surface-active agent capable of forming a lather in an amount of 2-25 wt.%, self-foaming agent in an amount of 1-60 wt.%, 5-40 wt.%, optionally thickening agent in an amount of 0.01-5 wt.%, optional deodorizing agents in an amount of up to 30 wt.%, or < 20 wt.%, or 1-30 wt.% or 1-20 wt.%, and optional additives in an amount of up to 30 wt.%, or < 20 wt.%, or < 10 wt.%, or 1-30 wt.%, or 1-20 wt.%, or 1-10 wt.%, or 1-5 wt.%.

The water dispersible surface-active agent capable of forming a lather may comprise a soap, a detergent, an anionic surfactant, a non-ionic surfactant, or a mixture of one or more of these. The soaps include, for example, the sodium, potassium and lower alkanolamine (preferably triethanolamine) salts of C10 to C20, preferably C 12 to C 18, fatty acids. Typical fatty acids include lauric, oleic, coconut oil, myristic, palmitic and stearic acid and mixtures thereof. The water dispersible surface-active agent may include a non-ionic, amphoteric and/or anionic surfactant.

The self-foaming agent can be any volatile hydrocarbon or halohydrocarbon selected from saturated aliphatic hydrocarbons having 4 to 6 carbon atoms, such as n-pentane, isopentane, neopentane, n-butane, isobutane, and mixtures thereof, as disclosed in US Patent Publication No. 2003026775, incorporated herein by reference.

In embodiments, the self-foaming agents are used as propellants in aerosol foam, however, other propellants can also be used, such as inert inorganic gases such as carbon dioxide, nitrogen, argon, and air, as disclosed in PCT Patent Publication No. WO04/037177, incorporated herein by reference.

Examples of thickening agents include clays (e.g., hectorite, bentonite, kaolin, etc.) alkyl glycols, polyalkyl glycol ethers, polyacrylic acids, polyacrylamides, modified cellulose polymers, gums, resins, starches, hydroxyalkyl cellulose polymers such as hydroxyethyl cellulose and hydroxypropyl cellulose, copolymers of acrylic acid and polyallyl sucrose, polyvinylpyrrolidone, polyvinylacohol, carboxymethyl cellulose, and cellulose methyl ether.

In embodiments, to make the aqueous foam deodorizing composition, the sulfonated polymer is dissolved in the solvent system (Part A), water is heated, a surface-active agent and a self-foaming agent is added to the water (Part B), then Part A and Part B are mixed together. The solution is then loaded into a dispenser, and the propellant added under pressure.

In embodiments, the foam, e.g., aerosol foam or a post-foaming composition is anhydrous. The anhydrous foam composition comprises sulfonated polymer in an amount of 0.1-30 wt.%, or 1-20 wt.%, or > 0.1 wt.%, or > 1 wt.%, or < 30 wt.%, or < 25 wt.%, or < 20 wt.% dissolved in the solvent system in an amount of up to 99.9 wt.%, or > 20 wt.%, or 20-99 wt.% or 25-95 wt.%, or 30-80 wt.%, propellant in an amount of 3-50 wt.%, or 5-40 wt.%, or 5-35 wt.%, optional deodorizing agents in an amount of up to 30 wt.%, or < 20 wt.%, or 1-30 wt.% or 1-20 wt.%, and optional additives in an amount of up to 30 wt.%, or < 20 wt.%, or < 10 wt.%, or 1-30 wt.%, or 1-20 wt.%, or 1-10 wt.%, or 1-5 wt.%. The solution is then loaded into a dispenser, and the propellant is added under pressure.

In applications, the deodorizing composition is the form of a foam can be sprayed, pumped, or otherwise deposited on to a surface.

(Solution): In embodiments, the deodorizing composition is in solution form with sulfonated polymer, optional deodorizing agents, and optional additives in a solvent system. In embodiments, solvent is present in an amount of up to 99.9 wt.%, or < 97 wt.%, or < 95 wt.%, or > 80 wt.% or > 70 wt.%, the sulfonated polymer is present in an amount of at least 0.1 wt.%, or > 0.5 wt.%, or > 1 wt.%, or < 50 wt.%, or < 35 wt.%, or < 20 wt.%, or < 10 wt.%, or 0.1-50, or 0.5-20, or 0.1-10, or 1-25, or 5-20 wt.%, and optional deodorizing agents are present in an amount of 0.1-30 wt.%, or < 30 wt.%, or < 20 wt.%, or < 10 wt.%, or 0-20 wt.%, or 0.5-15 wt.%, or 0.5-10 wt.%, and optional additives in an amount of up to 30 wt.%, or < 20 wt.%, or < 10 wt.%, or 1-30 wt.%, or 1-20 wt.%, or 1-10 wt.%, or 1-5 wt.%.

In embodiments, the deodorizing composition in solution form can be sprayed, poured, wiped, or otherwise coated onto a surface. In embodiments, when the deodorized composition is in solution form for aerosol spray applications, the deodorizing composition above further comprises a propellant, e.g., a volatile hydrocarbon or halohydrocarbon selected from saturated aliphatic hydrocarbons having 4 to 6 carbon atoms, such as n-pentane, isopentane, neopentane, n-butane, isobutane, and mixtures thereof (as disclosed in US Patent Publication No. 2003026775, incorporated herein by reference), or inert inorganic gases such as carbon dioxide, nitrogen, argon, and air, or mixtures thereof (as disclosed in PCT Patent Publication No. WO04/037177, incorporated herein by reference). If a propellant is present, the propellant can be present in an amount of 1-50 wt.%, or > 5 wt.%, or < 30 wt. %. If the solution is for use with a propellant in a dispenser, the non-propellant components are mixed and loaded into a dispenser first. Thereafter, the propellant can be inserted before the dispenser is fitted with a nozzle.

In applications, the deodorizing composition in the form of a solution can be applied to a surface by any of spraying (including aerosolized spraying), coating, pouring onto the surface, brushing, dipping, immersing, wetting, wiping, electrostatic deposit, rubbing, and the like.

(Spray Powder): In embodiments, when the deodorizing composition is in suspension form where after application, the liquid flashes off leaving the deodorizing composition as a powder residue. In embodiments, the suspension form comprises a liquid carrier, the sulfonated polymer, optional additives, and a propellant. The liquid carrier can be any suitable liquid carrier in which the sulfonated polymer does not dissolve but is suspended, such as a solvent, a liquid polymer, or combinations thereof. The liquid carrier may be aqueous, organic, or combinations thereof.

The propellant can be a propellant such as any volatile hydrocarbon or halohydrocarbon selected from saturated aliphatic hydrocarbons having 4 to 6 carbon atoms, such as n-pentane, isopentane, neopentane, n-butane, isobutane, and mixtures thereof (as disclosed in US Patent Publication No. 2003026775, incorporated herein by reference), or inert inorganic gases such as carbon dioxide, nitrogen, argon, and air, or mixtures thereof (as disclosed in PCT Patent Publication No. WO04/037177, incorporated herein by reference). The liquid carrier is present in an amount of < 99 wt.%, or < 97 wt.%, or < 95 wt.%, or > 80 wt.%, 80-99 wt.%, or 80-95 wt.%, the sulfonated polymer is present in an amount of > 1 wt.% or > 2 wt.%, or > 4 wt.%, or < 20 wt.%, or < 10 wt.%, or 1-20 wt.%, propellant in an amount of 1-50 wt.%, or > 1 wt.%, or > 5 wt.%, or < 30 wt. %, or 1-25 wt.%, optional deodorizing agents in an amount of < 30 wt.%, or < 20 wt.%, or 1-30 wt.% or 1-20 wt.%, and optional additives in an amount of < 30 wt.%, or < 20 wt.%, or < 10 wt.%, or 1-30 wt.%, or 1-20 wt.%, or 1-10 wt.%, or 1-5 wt.%.

In applications, the deodorizing composition in the form of a spray powder can be sprayed or electrostatically deposited onto a surface.

(Gel): In embodiments, when the deodorizing composition is in gel form, the deodorizing composition comprises a solvent system, the sulfonated polymer, and a gelling agent. Examples of gelling agents include fatty acid gellants, salts of fatty acids, hydroxy fatty acid gellants, esters and amides of fatty acid or hydroxy fatty acid gellants, cholesterolic materials, dibenzylidene alditols, lanolinolic materials, fatty alcohols, triglycerides, finely divided or colloidal silicas, fumed silicas, and silicates, which includes montmorillonite clays and hydrophobically treated montmorillonites, e.g., bentonites, hectorites and colloidal magnesium silicates, polymers, such as copolymers based on styrene-butadiene, and the like.

The solvent system is present in an amount of up 99.9 wt.%, or 98 wt.%, or < 96 wt.% or < 94 wt.%, or < 90 wt.%, or > 80 wt.%, or > 90 wt.% or > 95 wt.% or 80-99.9 wt.%, the sulfonated polymer is present in an amount of at least 0.1 wt.%, or 1 wt.% or > 2 wt.%, or > 4 wt.%, or < 20 wt.%, or < 10 wt.%, and the gelling agent is present in an amount of at least 1 wt.% or > 2 wt.%, or > 4 wt.%, or < 20 wt.%, or < 10 wt.%, if polymers used as gelling agents 0.1-20 wt.%, optional deodorizing agents in an amount of up to 30 wt.%, or < 20 wt.%, or 1-30 wt.% or 1-20 wt.%, and optional additives in an amount of up to 30 wt.%, or < 20 wt.%, or < 10 wt.%, or 1-30 wt.%, or 1-20 wt.%, or 1-10 wt.%, or 1-5 wt.%.

In applications, the deodorizing composition in the form of a gel can be wiped spread, sponged, brushed, coated, dipped, rubbed, or poured onto a surface.

(Elastic Foam): In embodiments, when the deodorizing composition is in elastic foam, the deodorizing composition is a polyurethane based foam or a polystyrene based foam. The sulfonated polymer can be added to a polyurethane (isocyanate and polyol) or a polystyrene (styrene monomer and pentane) during foaming / expansion, which allows for the polymer powder to embedded into the elastic foam. The sulfonated polymer is present in the elastic foam in an amount of up to 50, or < 40 wt.%, or < 25 wt.%, or < 20 wt.%, or > 1 wt.% or > 5 wt.%, or 1-20 wt.%, optional deodorizing agents in an amount of up to 30 wt.%, or < 20 wt.%, or 1-30 wt.% or 1-20 wt.%, and optional additives in an amount of up to 30 wt.%, or < 20 wt.%, or < 10 wt.%, or 1-30 wt.%, or 1-20 wt.%, or 1-10 wt.%, or 1-5 wt.%.

In applications, the deodorizing composition is the form of an elastic foam can be sprayed, pumped, or otherwise deposited on to a surface.

(Soft Solid): In embodiments, when the deodorizing composition is in soft solid form, e.g., a deodorant stick, a puck (for toilet). The soft solid can be water based, glycol based, or anhydrous. In embodiments the soft solid is water based, the deodorizing composition comprises sulfonated polymer, water, a gelling agent, and a liquid carrier to dissolve or suspend the polymer. In other embodiments, when the soft solid is anhydrous, the deodorizing composition comprises the sulfonated polymer, a volatile silicone, and a fatty alcohol.

The liquid carrier can be any suitable liquid carrier in which the sulfonated polymer does not dissolve but is suspended, such as a solvent, a liquid polymer, or combinations thereof. The liquid carrier may be aqueous, organic, or combinations thereof.

In embodiments, gelling agents include fatty acid gellants, salts of fatty acids, hydroxy fatty acid gellants, esters and amides of fatty acid or hydroxy fatty acid gellants, cholesterolic materials, dibenzylidene alditols, lanolinolic materials, fatty alcohols, triglycerides, finely divided or colloidal silicas, fumed silicas, and silicates, which includes montmorillonite clays and hydrophobically treated montmorillonites, e.g., bentonites, hectorites and colloidal magnesium silicates, polymers, such as copolymers based on styrene-butadiene, and the like.

The water based soft solid is made by heating water and a liquid carrier, then adding the gellant, and adding in sulfonated polymer (liquid or powder) with a mechanical impeller prior to cooling the stick. The liquid carrier is present in an amount of 10-70 wt.%, or 30-50 wt.%, the gelling agent is present in an amount of 0.1-20 wt.%, or 1-10 wt.%, the water is present in an amount of 0-50 wt.%, or 10-40 wt. %, the sulfonated polymer is present in an amount of 0.1-50 wt.%, or 5-35 wt.%, optional deodorizing agents in an amount of up to 30 wt.%, or < 20 wt.%, or 1-30 wt.% or 1-20 wt.%, and optional additives in an amount of up to 30 wt.%, or < 20 wt.%, or < 10 wt.%, or 1-30 wt.%, or 1-20 wt.%, or 1-10 wt.%, or 1-5 wt.%.

The anhydrous soft solid is made by heating a volatile silicone to 58-60°C, pre-heating a fatty alcohol to 58-65°C and adding to the silicone in a stirred mixing vessel with the sulfonated polymer and blending, the cooling. The anhydrous soft solid comprises the sulfonated polymer in an amount of 5-50 wt.%, or 5-40 wt.%, or < 50 wt.%, or < 45 wt.%, or > 5 wt.%, a volatile silicone in an amount of 40-90 wt.% or 50-80 wt.%, or < 40 wt.%, or < 90 wt.%, a fatty alcohol in an amount of 5-60 wt.%, or 5-50 wt.%, or > 5 wt.%, or > 10 wt.%, or < 60 wt.%, or < 50 wt.%, or < 40 wt.%, optional deodorizing agents in an amount of up to 30 wt.%, or < 20 wt.%, or 1-30 wt.% or 1-20 wt.%, and optional additives in an amount of up to 30 wt.%, or < 20 wt.%, or < 10 wt.%, or 1-30 wt.%, or 1-20 wt.%, or 1-10 wt.%, or 1-5 wt.%.

Examples of volatile silicone resins include polymethylsilsesquioxane, trimethylsiloxysilicate, polypropylsilsesquioxane, dimethicone, cyclopentasiloxane, dimethicone, dimethiconol crosspolymer, polysilicone-6, polysilicone-8, poly silicone- 11, and polysilicone-14.

In embodiments, fatty alcohol is defined as any saturated or unsaturated, linear or branched C8-C30 fatty alcohol, which is optionally substituted, in particular with one or more hydroxyl groups (in particular 1 to 4). If they are unsaturated, these compounds may comprise one to three conjugated or non- conjugated carbon-carbon double bonds. In embodiments, fatty alcohols are unsaturated and/or branched. Among the C8-C30 fatty alcohols, C12-C22 fatty alcohols, for example, are used. Examples of fatty alcohol include isostearyl alcohol, oleyl alcohol, linoleyl alcohol, undecylenyl alcohol, palmitoleyl alcohol, linolenyl alcohol, erucyl alcohol, and mixtures thereof.

In applications, the deodorizing composition in the form of a soft solid can be wiped, spread, brushed, coated, or rubbed onto a surface.

(Embedded Form): In embodiments, the deodorizing composition can be embedded into a substrate, such as a fabric, e.g., nonwoven, by dipping, flow coating, roll coating, bar coating, spray coating, curtain, rotogravure, brushing, wire wound rod coating, pan fed reverse roll coating, nip-fed coating, spraying, knife coating, spin coating, immersion coating, slot-die coating, ultrasonic spray coating, and the like, then dried. Applying the deodorizing composition to nonwoven can prevent and reduce odor while also providing antimicrobial benefits, as well as moisture wicking and evaporative cooling benefits. The sulfonated polymer is present in an amount of 1-50 g/m², or < 40 g/m², or < 30 g/m² or < 20 g/m², or 1-10 g/m².

(Film): In embodiments, the deodorizing composition can be in the form of films, such as peel and stick, or membranes and is formed by using casting, electrospinning, extrusion, compression, coating the sulfonated polymer by itself or on a substrate. In embodiments, the sulfonated polymer film has a coating thickness of 1-20 microns, or 1-15 microns, or 5-15 microns, or > 1 micron, or > 3 microns, or > 5 microns, or < 20 microns, or < 15 microns.

In applications, the deodorizing composition in film form is a attached to a surface or is a peel-off layer applied onto a surface.

(Microspheres): In embodiments, the deodorizing composition is applied in the form of microspheres, wherein the (expandable) microspheres are encapsulated or coated with the deodorizing agent containing the sulfonated polymer. When the microspheres are heated, the gas inside the shell increases its pressure and the thermoplastic shell softens, resulting in a dramatic increase in the volume of the microspheres coated with the sulfonated polymer, thus increasing the deodorizing effectiveness or impact. When fully expanded, the volume of the microspheres may increase more than 40 times their original volume.

Examples of microspheres for use with the deodorizing composition include Expancel^{™} expandable microspheres available from Nouryon, or chemical blowing agents, such as Celogen 754A from Chemtura. In embodiments, the deodorizing agent is incorporated into microspheres as disclosed in EP0904065, incorporated herein by reference. In embodiments, the sulfonated polymer in present in an amount of 1-99.9 wt.%, or 1-95 wt.%, or 5-90 wt.%, based on the total weight of microspheres.

In embodiments, the microspheres incorporating the deodorizing composition are spread onto surfaces, embedded into articles, or released into space wherein odor control is desired.

### Method to Remove / Control Odor

The deodorizing composition is effective in providing durable odor control as well as antimicrobial protection. As enzymes secreted by bacteria are primarily responsible for metabolizing biological material to generate foul odor causing compounds, eradicating the odor causing bacteria itself would eliminate the issue at its root cause. In embodiments, the deodorizing composition also achieves odor reduction even in the absence of any antimicrobial action.

In embodiments, the deodorizing composition is applied to a wipe to get the wipe saturated before application onto a surface, as disclosed in US Patent Publication No. 2023-0241003, incorporated herein by reference. Examples of the wipe include towelette, absorbent sheet, fabric, sponge, paper, absorbent polymer, and mixtures thereof. In embodiments, the deodorizing composition is applied to the wipe by impregnation, coating, immersing, dipping, sinking, drench, covering, rinsing, wetting, absorbing, and the like.

In embodiments, the deodorizing composition is applied onto a surface in the form of membrane or film, e.g., peel and stick film.

In embodiments, the deodorizing composition is applied onto a surface to be protected (or with odor to be suppressed) by any of spraying (including aerosolized spraying), coating, pouring onto the surface, brushing, dipping, wiping, sprinkling, electrostatic deposit, rubbing, and the like, or cover at least 90% of the surface, or > 95%, or > 98%, or up to 100% of the surface for odor control. The composition is allowed to be in contact with the surface for at least 5 seconds, forming a protective coating / deodorizing layer on the surface.

The contact between the deodorizing composition and the surface can be repeated, e.g., soaking, spraying, wiping, rubbing, or scrubbing motion, etc., for an accumulated time of > 5 sec., > 10 sec., > 30 sec., < 10 min, < 5 min., depending on the amount of odor to be controlled or removed, and the desired duration for protection. In embodiments, the deodorizing composition is in contact with the surface for a period of 5 sec - 30 min., or 10 sec - 25 min., or 20 sec - 20 min., or 10 sec - 15 min., 20 sec - 10 min., or 1 min. - 5 min., or > 0.5 sec, or < 10 min.

### Surfaces

The deodorizing composition can be applied to control, protect and remove odor from space (e.g., a room, a container), or from hard and / or soft surfaces, such as automobiles, appliances, tiles, floor materials, glass, plastics, wood, metals, metal alloys, ceramic, epoxy, stone, veneer, laminates, carpets, etc.; building materials (e.g., doors, door knobs, walls, stairs etc.), facilities (e.g., building, offices, etc.), fabrics (e.g., clothing, curtains, drapes, etc.); furniture (e.g., chairs, seats, trays, etc.); interior transportation surfaces (e.g., in cars, trucks, aero plane, trains, etc.), electronics, medical devices; laboratory equipment; kitchens and restaurants; hotel rooms; humidifiers / dehumidifiers / air conditioners / air filtering equipment; and appliances, etc.

The deodorizing composition in embodiments are particularly suitable for use in moist environments lending themselves to malodors, such as bathrooms, gymnasiums, kitchen appliances, cellar surfaces, sport cloths, wet carpets, and the like.

### Performance of the Deodorizing Composition

The deodorizing composition, after application onto a surface, can reduce odor (in the context of killing odor-causing microbes) by at least 5%, or > 10%, or > 25%, after 5 minutes, or 30 minutes, or 60 minutes, or 180 minutes. In embodiments, the deodorizing composition, after application onto a surface, reduces Olfactory Intensity scores (as in 0 to 5) by at least 20% (e.g., going from 5 to 4, from 4 to 3, from 3 to 2, etc.), or at least 40% (e.g., going from 5 to 3, from 4 to 2, from 3 to 1, etc.), or a least 60% (going from 5 to 2, or 4 to 1) after 30 minutes, 60 minutes, 90 minutes, 120 minutes, or 180 minutes. In embodiments, the deodorizing composition, after embedding or impregnating the sulfonated polymer into an article, reduces the Olfactory Intensity scores by > 20%, or > 40%, or > 60%, after 30 minutes, 60 minutes, 90 minutes, 120 minutes, or 180 minutes.

In embodiments, the deodorizing composition comprising the sulfonated polymer is capable of killing > 90%, or > 95%, or > 98%, or > 99%, or > 99.9% of microbes coming in contact with sulfonated polymer in < 30, or < 25, or < 20, or < 15, or < 10, or < 5, or < 1 min. In embodiments, the deodorizing composition comprising the sulfonated polymer is found effective in destroying / inactivating at least 99.9% (3 log₁₀ CFU), or at least 99% (2 log₁₀ CFU), or at least 95%, or at least 90% (1 log₁₀ CFU) of microbes in < 30 min., or < 60 min., or < 120 min. upon contact with the sulfonated polymer.

In embodiments, the deodorizing composition is be used to suppress odor - as the microbes causing odor are effectively killed by the sulfonated polymer in the composition. In embodiments, the deodorizing composition effectively suppresses an increase in the Olfactory Intensity score from a surface after a period of 30 minutes, 60 minutes, 90 minutes, 120 minutes, or 180 minutes, as compared to a surface not treated with the deodorizing composition. Suppression here means that the deodorizing composition keeps the odor level low, and not to increase. The suppression in the score in embodiments is > 1, or preferably > 2 in the Olfactory Intensity score after 30 minutes, 60 minutes, 90 minutes, 120 minutes, or 180 minutes.

Examples: The following illustrative examples are intended to be non-limiting.

Example 1 - Odor neutralization: Samples were evaluated for odor neutralization using the below components.

QAC is a commercially available neutral quaternary ammonium chloride, hospital-grade detergent / disinfectant (Zep^{™} DZ-7 from Zep), with a pH of 6.0-7.0.

NaHCO₃ is a commercially available sodium bicarbonate.

Preparation of sulfonated copolymer powder: sulfonated penta block copolymer (SPBC) of the structure poly[tert-butylstyrene-b-(ethylene-alt-propylene)-b-(styrene-co-styrene¬sulfonate)-b-(ethylene-alt-propylene)-tert-butylstyrene] from Kraton Corporation with 52% (IEC 2.0) sulfonation in solution of cyclohexane / heptane (without antioxidant) is dried then shredded, forming flakes or ribbons. The ribbons having an average size of ~ 0.4 inches is cryoground in a grinder having a 20-mesh screen. The resultant free flowing finely divided powder do not block or agglomerate, when packaged and contained under load. The powder has an average diameter of 50-120 microns.

A small piece (0.5" x 0.5") of nonwoven fabric was placed in the bottom of a glass vial. Odor was infused into the fabric by pipetting five (5) droplets of QAC onto the fabric. The powder or powder mixtures, as described in Table 1, were then sprinkled on top of the odor infused nonwoven fabric.

**Table 1**

| | QAC | SPBC | NaHCO₃ |
|---|---|---|---|
| Vial 1 | 5 droplets | - | - |
| Vial 2 | 5 droplets | - | 0.1 g |
| Vial 3 | 5 droplets | 0.1 g | - |
| Vial 4 | 5 droplets | 0.05 g | 0.05 g |

A panel of four people smelled each vial to evaluate the samples for Olfactory Intensity, using a scoring scale of 0-5, with 5 being very strong, 4 being strong, 3 being medium, 2 being weak, 1 being very weak, 0 not detectable. At the start, the fabric by itself had an Olfactory Intensity of 0, and the QAC infused fabric had an Olfactory Intensity of 5. The panel smelled each sample at timed intervals, including immediately after the powder(s) is applied, 30 minutes later, 60 minutes later, and 180 minutes later. The Olfactory Intensity scores were then averaged and are provided in Table 2 below.

**Table 2**

| | 0 minutes | 30 minutes | 60 minutes | 180 minutes |
|---|---|---|---|---|
| Vial 1 | 5 | 5 | 5 | 5 |
| Vial 2 | 4.75 | 4.75 | 3.25 | 2.75 |
| Vial 3 | 3.25 | 2.5 | 1.25 | 0 |
| Vial 4 | 3.75 | 3.5 | 1.5 | 0.75 |

Example 2: In this example, the deodorizing composition was tested against odor causing microbes. The micro-organisms tested were evaluated per US Environmental Protect Agency Office of Pesticide Programs protocol, "*Interim Method for Evaluating the Efficacy of Antimicrobial Surface Coatings.*" Example 2 determined efficacy for *Pseudomonas aeruginosa* and *Staphylococcus aureus.*

Preparation of sulfonated copolymer film: sulfonated penta block copolymer (SPBC) of the structure poly[tert-butylstyrene-b-(ethylene-alt-propylene)-b-(styrene-co-styrene-sulfonate)-b-(ethylene-alt-propylene)-tert-butylstyrene] with an IEC 1.0 sulfonation in solution of cyclohexane / heptane (without antioxidant) was cast into film at a nominal thickness of 1 mil (20-25 microns) on a peel-and-stick film. The peel-and-stick film was made from a polyethylene terephthalate (PET) film about 2 mil thick coated with an adhesive and release liner.

The peel-and-stick film was cut into slightly smaller than 1" x 1" squares. The release liner was removed and the squares were adhered to 1" x 1" AISI 304 stainless steel coupons. A 20 µL mixture of stock cultures of *Pseudomonas aeruginosa* and *Staphylococcus aureus* are placed directly on the squares (10⁴-10⁵ colonies/coupons). Following 1-2 hour contact time in a biosafety cabinet at ambient temperature, e.g., 15° to 25°C, the squares are placed in a Dey-Engley neutralizing agent (to arrest the action of the antimicrobial) vortexed and sonicated to remove adhered bacteria from the squares if any.

Serial dilutions were prepared with Phosphate Buffer Saline (PBS) 9 mL of PBS and 1 mL of recovered bacterial solution and so on, filtered onto polyethersulfone filters. Filters are plated onto agar plates to determine the efficacy, showing > 99% of the microbes within 120 minutes, 60 minutes, 30 minutes, or within 5 minutes of exposure are killed/inactivated. For *Staphylococcus aureus* the sulfonated polymer showed at least 4 log reduction. For *Pseudomonas aeruginosa* the sulfonated polymer showed at least 4 log reduction.

Example 3: In this example, the deodorizing composition was tested against different odor-causing microbes. The micro-organisms tested were evaluated per US Environmental Protect Agency Office of Pesticide Programs protocol, "*Interim Method for Evaluating the Efficacy of Antimicrobial Surface Coatings.*" Example 3 determined efficacy for *Escherichia coli*, MRSA, *Enterobacter aerogenes* and *Klebsiella pneumoniae.*

Preparation of sulfonated copolymer film: sulfonated penta block copolymer (SPBC) of the structure poly[tert-butylstyrene-b-(ethylene-alt-propylene)-b-(styrene-co-styrene-sulfonate)-b-(ethylene-alt-propylene)-tert-butylstyrene] with an IEC 1.0 sulfonation in solution of cyclohexane / heptane (without antioxidant) was cast into film at a nominal thickness of 1 mil (20-25 microns) on a peel and stick film. The peel and stick film was made from a polyvinyl chloride (PVC) substrate about 3 mil thick coated with an adhesive and release liner.

The peel and stick film was cut into 1" x 1" squares. A 20 µL mixture of stock cultures of *Escherichia coli*, MRSA, *Enterobacter aerogenes* and *Klebsiella pneumoniae* are placed directly on the squares (~ 10⁴-10⁶ colonies/coupons). Following 1-2 hour contact time in a biosafety cabinet at ambient temperature, e.g., 15° to 25°C, the squares are placed in PBS (Phosphate Buffer Saline) and vortexed to aid removal of bacteria from the squares into the solution.

Serial dilutions were prepared with PBS (Phosphate Buffer Saline) 9 mL of PBS and 1 mL of recovered bacterial solution and so on, filtered onto polyethersulfone filters. Filters are plated onto agar plates to determine the efficacy, showing > 99% of the microbes within 120 minutes, 60 minutes, 30 minutes, or within 5 minutes of exposure are killed/inactivated. For *Escherichia coli* the sulfonated polymer showed at least 6 log reduction. For MRSA the sulfonated polymer showed at least 4 log reduction. *Enterobacter aerogenes* the sulfonated polymer showed at least 6 log reduction. *Klebsiella pneumoniae* the sulfonated polymer showed at least 6 log reduction.

Example 4: A deodorizing composition in aerosol lathering foam is formed by dissolving sulfonated polymer in a nonaqeous solvent system (Part A) then emulsifying under mixing with impeller into an aqueous phase containing surfactant (Part B). The emulsion is then put into a pressured can with propellant (Part C). The components are identified in Table 3 below.

Odor is infused onto a surface by pipetting five (5) droplets of QAC onto a small piece (0.5" x 0.5") of nonwoven fabric placed in the bottom of a glass vial. The aerosol lathering foam is then applied on top of the QAC wetted nonwoven fabric enough to cover the sample.

**Table 3**

| Part A | | Part B | | Part C | |
|---|---|---|---|---|---|
| Component | Amount (wt.%) | Component | Amount (wt.%) | Component | Amount (wt.%) |
| Sulfonated Polymer | 2 | Water | 45 | Isobutane | 12 |
| Isododecane | 24 | cocamidopropylbetaine | 5 | | |
| Butanol | 12 | | | | |

An anhydrous foam is also made by dissolving 2 wt.% sulfonated polymer in a solvent system of 65% isododecane and 37% butanol. The solution is then put into a pressured can with 12 wt.% of an isobutane propellant.

It is expected that 30 minutes after application of the deodorizing composition in either aerosol lathering foam or anhydrous foam form to the nonwoven fabric, the Olfactory Intensity will be reduced by > 20%.

Example 5: A deodorizing composition is made in solution form for application via aerosol and non-aerosol. The deodorizing composition is made by mixing 49 wt.% of 1-propanol, 49 wt.% of ethyl butyl acetate, and 2 wt.% of sulfonated polymer. For an aerosolized deodorizing composition, the deodorizing composition is placed into a can followed with isobutane to pressurize.

The aerosol deodorizing composition and the non-aerosol deodorized composition are then applied on top of the odor infused nonwoven fabric of Example 4 to cover the sample.

It is expected that 30 minutes after application of the deodorizing composition in aerosol and non-aerosol forms to the odor-infused nonwoven fabric, the Olfactory Intensity will be reduced by at least 20%.

Example 6: A deodorizing composition in made in suspension form where the liquid flashes off leaving a powder residue of sulfonated polymer. The deodorizing composition in suspension form is made by mixing 5 wt.% sulfonated polymer, and 90 wt.% ethanol. The deodorizing composition is placed into a can followed with 5 wt.% isobutane to pressurize.

The deodorizing composition with sulfonated polymer in suspension from is applied on top of the odor infused nonwoven fabric of Example 4 to cover the sample .

It is expected that 30 minutes after application of the deodorizing to the odor-infused nonwoven fabric, the Olfactory Intensity will be reduced by at least 20%.

Example 7: A deodorizing composition is made in gel form. The deodorizing composition made by first mixing 2 wt.% sulfonated polymer and 2 wt.% bentonite. The mixture is then dissolved in solvent of 64 wt.% of isododecane and 32 wt.% of ethylene glycol hexyl ether, forming a gel.

The deodorizing composition in gel from is then applied on top of the odor infused nonwoven fabric of Example 4.

It is expected that 30 minutes after application of the deodorizing composition to the odor infused nonwoven fabric, that the Olfactory Intensity will be reduced by at least 20%.

Example 8: A deodorizing composition is made in elastic foam. The deodorizing composition is a polyurethane foam or a polystyrene foam. Polyurethane is formed by reacting isocyanate and a polyol in a 1:1 ratio in the presence of a catalyst. To make the polyurethane into a foam, water is added to the mixture during the reaction forming gas bubbles which become trapped when the liquid ingredients solidify creating a foam. The sulfonated polymer in powder form is added prior to the solidification step embedding the polymer into the foam. Polystyrene foam is formed by incorporating 1-20 wt.% of sulfonated polymer powder into the styrene monomer and pentane phases of polystyrene foam manufacture.

Odor is infused onto pieces (0.5" x 0.5") of polystyrene and polyurethane foam by pipetting five (5) droplets of QAC onto each piece. It is expected that 30 minutes after application of the QAC onto the odor infused foam pieces, the Olfactory Intensity will be reduced by at least 20%.

Example 9: A deodorizing composition is made in soft solid form, e.g., a deodorant stick. The soft solid deodorizing composition is made by first heating 35 wt.% water and 40 wt.% propylene glycol, then adding 5 wt.% sodium stearate forming an emulsion and adding in 20 wt.% sulfonated polymer by mixing with mechanical impeller prior to cooling the stick.

The deodorizing composition in soft solid form is then applied on top of the odor infused nonwoven fabric of Example 4 to cover the sample.

It is expected that 30 minutes after application of the deodorizing composition to the odor infused nonwoven fabric, that the Olfactory Intensity will be reduced by at least 20%.

Example 10: A deodorizing composition is made in an anhydrous soft solid form. The soft solid is made by heating 65 wt.% cyclopentasiloxane to 58-60°C and pre-heating 19 wt.% stearyl alcohol to 58-65°C. The cyclopentasiloxane is then added to the pre-heated stearyl alcohol in a stirred mixing vessel with the sulfonated polymer and blending, then cooling.

The deodorizing composition in anhydrous soft solid form is then applied on top of the odor infused nonwoven fabric of Example 4 to cover the sample.

It is expected that 30 minutes after application of the deodorizing composition to the odor infused nonwoven fabric, the Olfactory Intensity will be reduced by at least 20%.

Example 11: The deodorizing composition is embedded into a non-woven substrate by dipping, flow coating, roll coating, bar coating, spray coating, curtain, rotogravure, brushing, wire wound rod coating, pan fed reverse roll coating, nip-fed coating, spraying, knife coating, spin coating, immersion coating, slot-die coating, ultrasonic spray coating, and the like, then dried.

Odor is infused into pieces (0.5" x 0.5") of the non-woven substrate (embedded with the deodorizing composition) by pipetting five (5) droplets of QAC onto each piece. It is expected that 30 minutes after application of the QAC onto the embedded non-woven substrate, that the Olfactory Intensity will be reduced by at least 20%.

Example 12: The deodorizing composition is made into film form by casting the sulfonated polymer into a film. Odor is infused into the sulfonated polymer film by pipetting 5 droplets of QAC onto 0.5" by 0.5" squares of film. It is expected that 30 minutes after application of the QAC onto the film, that the Olfactory Intensity will be reduced by at least 20%.

As used herein, the term "comprising" means including elements or steps that are identified following that term, but any such elements or steps are not exhaustive, and an embodiment can include other elements or steps. Although the terms "comprising" and "including" have been used herein to describe various aspects, the terms "consisting essentially of" and "consisting of" can be used in place of "comprising" and "including" to provide for more specific aspects of the disclosure and are also disclosed.

For the purposes of this specification and appended claims, unless otherwise indicated, all numbers expressing quantities, percentages or proportions, and other numerical values used in the specification and claims, are to be understood as being modified in all instances by the term "about." Accordingly, unless indicated to the contrary, the numerical parameters set forth in the following specification and attached claims are approximations that can vary depending upon the desired properties sought to be obtained. It is noted that, as used in this specification and the appended claims, the singular forms "a," "an," and "the," include plural references unless expressly and unequivocally limited to one referent. As used herein, the term "include" and its grammatical variants are intended to be non-limiting, such that recitation of items in a list is not to the exclusion of other like items that can be substituted or added to the listed items.

Unless otherwise specified, all technical and scientific terms used herein have the same meanings as commonly understood by one of skill in the art to which the disclosed disclosure belongs, the recitation of a genus of elements, materials, or other components, from which an individual component or mixture of components can be selected, is intended to include all possible sub-generic combinations of the listed components and mixtures thereof.

The patentable scope is defined by the claims, and can include other examples that occur to those skilled in the art. Such other examples are intended to be within the scope of the claims if they have structural elements that do not differ from the literal language of the claims, or if they include equivalent structural elements with insubstantial differences from the literal languages of the claims. To an extent not inconsistent herewith, all citations referred to herein are hereby incorporated by reference.

## Claims

1. A method to control odor due to microbes or chemical action, the method comprises:
applying a deodorizing composition to a surface having an initial Olfactory Intensity score, the deodorizing composition comprising:
a sulfonated polymer having an ion exchange capacity (IEC) of greater than 0.5 meq/g; and
optionally an additional deodorizing agent;
wherein the deodorizing composition is present in amounts effective to reduce the Olfactory Intensity score by at least 20% after 30 minutes or suppress an increase of more than 1 in the Olfactory Intensity score after a period of 24 hours.

2. The method of claim 1, wherein the sulfonated polymer is a sulfonated styrenic block copolymer obtained by sulfonation of a styrenic block copolymer precursor having a general configuration of: A-B-A, (A-B)ₙ(A), (A-B-A)ₙ, (A-B-A)ₙX, (A-B)ₙX, A-D-B, A-B-D, A-D-B-D-A, A-B-D-B-A, (A-D-B)ₙA, (A-B-D)ₙA (A-D-B)ₙX, (A-B-D)ₙX, (A-D-B-D-A)ₙX, (A-B-D-B-A)ₙX or mixtures thereof, where n is an integer from 2 to 30, and X is a residue of a coupling agent; and wherein:
each block A is derived from polymerized para-substituted styrene monomers selected from the group consisting of para-methylstyrene, para-ethylstyrene, para-n-propylstyrene, para-iso-propylstyrene, para-n-butylstyrene, para-sec-butylstyrene, para-iso-butylstyrene, para-t-butylstyrene, isomers of para-decylstyrene, isomers of para-dodecylstyrene, and mixtures thereof;
each block B is derived from the polymerized vinyl aromatic monomers selected from the group consisting of unsubstituted styrene, ortho-substituted styrene, meta-substituted styrene, alpha-methylstyrene, 1,1-diphenylethylene, 1,2-diphenylethylene, and mixtures thereof; and
each block D is derived from the polymerized conjugated diene monomers selected from the group consisting of isoprene, 1,3-butadiene, 2,3-dimethyl-1,3-butadiene, 1-phenyl-1,3-butadiene, 1,3-pentadiene, 1,3-hexadiene, 3-butyl-1,3-octadiene, farnesene, myrcene, piperylene, cyclohexadiene, and mixtures thereof.

3. The method of any of claims 1 - 2, wherein the deodorizing composition is applied to the surface by any of impregnation, coating, immersing, dipping, rinsing, wetting, spraying, soaking, wiping, rubbing, brushing, sprinkling, electrostatic deposit, scrubbing, and combinations.

4. The method of any of claims 1 - 3, wherein the deodorizing composition is applied as powder, a solution, a liquid spray, a powder spray, a foam, a gel, an aerosol, a film, or as microspheres.

5. The method of any of claims 1 - 4, wherein the deodorizing composition further comprises a solvent, and wherein the sulfonated polymer is a sulfonated styrenic block copolymer having an ion exchange capacity (IEC) of greater than 1 meq/g.

6. The method of any of claims 1 - 5, wherein the optional deodorizing agent is a selected from the group consisting of: cage molecules, sodium bicarbonate, hydrated silica, silica gel, perlite, bentonite or hectorite clay, zeolites, wood dust, carbon black, benzoic acid and derivatives thereof, and deodorizing materials that have a Malodor Reduction Value of at least 0.5, and mixtures thereof.

7. The method of any of claims 1-6, wherein the composition further comprises at least an additive selected from the group consisting of: fragrances, propellants, stabilizers, buffering agents, surfactants, detackifying agents, natural oils, detectable compounds, neutralizing agents, thickeners, fillers, color change pH indicators, other resins, viscosity modifiers, wetting agents, deaerators, colorants, flow modifiers, drip retardants, antistatic agents, processing aids, stress-relief additives, luminescent additives, such as phosphorescent and fluorescence, and mixtures thereof, in amounts of 0.05 - 30 wt.%, based on total weight of the deodorizing composition.

8. The method of any of claims 1 - 7, wherein the sulfonated polymer is sufficiently sulfonated for a reduction in a microbe concentration by at least 1 logic CFU (colony forming units) within 120 min upon contact with the deodorizing composition after being applied to the surface.

9. The method of any of claims 1 - 8, wherein:
the sulfonated polymer is sulfonated to have least 10 mol% of sulfonic acid or sulfonate ester functional groups based on total mol of monomer units or polymer blocks to be sulfonated in the sulfonated polymer;
the sulfonated polymer has a degree of sulfonation of 10 to 100 mol%; and
the sulfonated polymer has an ion exchange capacity (IEC) of 0.5 to 2.6 meq/g.

10. The method of any of claims 1 - 9, wherein the sulfonated polymer is dissolved in a solvent system comprising one or more solvents selected from the group consisting of organic solvents, inorganic solvents, terpene-based solvents, and decarboxylated rosin acids.

11. The method of any of claims 1 - 10, wherein the solvent is selected from the group consisting of acetone, acetyl acetone, acetic acid, acetonitrile, benzonitrile, 2-butanone, t-butyl alcohol, benzyl alcohol, cyclohexane, cyclohexanol, cyclohexanone, dichloromethane, 1,2-dichloroethane, diethylene glycol, diethyl ether, diglyme (diethylene glycol dimethyl ether), 1,2-dimethoxy-ethane (glyme, DME), 1,4-dioxane, methanol, ethanol, 2-ethoxyethanol, 2-propanone, 1,2-propanediol, methyl acetate, ethyl acetate, ethyl acetoacetate, butyl acetate, ethylene glycol, glycerin, heptane, hexamethylphosphoramide (HMPA), hexamethylphosphoroustriamide (HMPT), hexane, methyl t-butyl ether (MTBE), dimethylsulfoxide (DMSO), methyl ethyl ketone (MEK), dimethylformamide (DMF), methyl propyl ketone (MPK), dimethylphthalate, nitromethane, pentane, petroleum ether, pyridine, toluene, aniline, triethyl amine, diethylamine, N,N-dimethylacetamide, o-xylene, m-xylene, p-xylene, naphtha, di-n-butylphthalate, 3-pentanone, chloroform, bis(2-methoxyethyl) ether, ethyl benzoate, tetrahydrofuran(THF), anisole, chlorobenzene, N,N-dimethylaniline, carbon disulfide, carbon tetrachloride, ethylene glycol mono hexyl ether (EGMHE), 1-undecanol, 1-pentanol, tert-butyl methyl ether, 2-ethyl butyl acetate, butyl lactate, N-dodecane, butanol, ethyl lactate, 1-decanol, isopropyl myristate, 1-propanol, 2-propanol, isododecane, ethyl acetate, methyl sulfate, dimethyl sulfate, cresol, creosol, decanal, ethyl glycol acetate, 2-ethyl hexanoic acid, neopentyl glycol, and mixtures thereof.

12. The method of any of claims 1 - 11, wherein each solvent has at least one of: an OH group, an ester and / or ether group, or 10 or more carbon atoms.

13. The method of any of claims 1 - 12, wherein the solvent system has a total solubility parameter (*δ_{T}*) of > 14.5.

14. The method of any of claims 1 - 13, wherein the solvent system has a relative polarity of 0.005 to 0.65.

15. The method of any of claims 1 - 14, wherein the deodorizing composition is applied to remove or suppress odor from space, hard surfaces, soft surfaces, appliances, tiles, floor materials, glass, plastics, wood, metals, metal alloys, ceramic, epoxy, stone, veneer, laminates, carpets, building materials, fabrics, furniture, interior transportation surfaces, electronics, medical devices, laboratory equipment, kitchen surfaces, hotel room surfaces, humidifiers, dehumidifiers, air conditioners, air filtering equipment, bathroom surfaces, and gymnasium surfaces.
